# EUROPÄISCHE PATENTSCHRIFT

(11) **EP 3 389 920 B1**
(45) Veröffentlichungstag und Bekanntmachung des Hinweises auf die Patenterteilung: **07.06.2023**
(21) Anmeldenummer: 16812924.5
(22) Anmeldetag: 12.12.2016
(51) Int. Cl.: B23P 9/02, F02F 1/18, C23C 4/02, B24B 39/02, B21H 7/18, B24B 33/02, B23B 27/24

(54) **VERFAHREN UND WERKZEUG ZUM AUFRAUEN EINER ZU BESCHICHTENDEN ZYLINDERBOHRUNGSWANDUNG SOWIE BAUTEIL ZUM FÜHREN EINES ZYLINDERKOLBENS**
METHOD AND TOOL FOR ROUGHENING A CYLINDER BORE WALL TO BE COATED, AND COMPONENT FOR GUIDING A CYLINDER PISTON
PROCÉDÉ ET OUTIL POUR RENDRE RUGUEUSE UNE PAROI D'ALÉSAGE DE CYLINDRE À REVÊTIR ET ÉLÉMENT DE GUIDAGE D'UN PISTON DE CYLINDRE

(30) Priorität: 18.12.2015 DE 102015226062
(43) Veröffentlichungstag der Anmeldung: 24.10.2018
(73) Patentinhaber: MAG IAS GmbH, 73054 Eislingen (DE); Sturm Maschinen- & Anlagenbau GmbH, 94330 Salching (DE)
(72) Erfinder: BIRKNER, Tobias, 73779 Deizisau (DE); KULL, Oliver, 73765 Neuhausen (DE); KESTING, Marc, 94315 Straubing (DE)
(74) Vertreter: Rau, Schneck & Hübner Patentanwälte Rechtsanwälte PartGmbB
(86) Internationale Anmeldenummer: PCT/EP2016/080540
(87) Internationale Veröffentlichungsnummer: WO 2017/102608

(56) Entgegenhaltungen:
- EP-A2- 2 267 178
- DE-A1-102014 209 054
- DE-B3- 10 314 249
- GB-A- 842 386
- JP-A- 2006 097 045
- JP-A- 2006 181 608
- US-A- 3 133 344
- US-A1- 2014 010 977

## Beschreibung

Die Erfindung betrifft ein Verfahren und ein Werkzeug zum Aufrauen einer zu beschichtenden Zylinderbohrungswandung. Ferner betrifft die Erfindung ein Bauteil zum Führen eines Zylinderkolbens.

Aus der EP 2 267 178 A2 (entspricht US 2010/0326270 A1) ist ein Verfahren zum Aufrauen einer zu beschichtenden Metalloberfläche eines Zylinderblocks bekannt. Die Metalloberfläche begrenzt eine Zylinderbohrung. Mittels eines Drehmeißels wird in der Metalloberfläche eine in Umfangsrichtung verlaufende spiralförmige Nut erzeugt. Die Nut wird aufgrund der spiralförmigen Ausbildung durch einen Nutsteg seitlich begrenzt. Der Nutsteg ist plastisch verformt, sodass dieser in einer zu einer Mittellängsachse der Zylinderbohrung gerichteten radialen Richtung Hinterschnitte ausbildet. Die Nut verjüngt sich somit im Querschnitt in der radialen Richtung aufgrund der Hinterschnitte. Hierdurch weist eine anschließend auf die aufgeraute Metalloberfläche aufgebrachte Beschichtung eine verbesserte Haftung auf.

Aus der DE 10 2014 209 054 A1 ist ein Verfahren zum mechanischen Aufrauen einer Kolbenlauffläche einer Zylinderbuchse bekannt. In einem ersten Arbeitsgang wird ein Rillenformwerkzeug axial entlang der Oberfläche bewegt, sodass in die Oberfläche Axialrillen eingearbeitet werden. In einem anschließenden zweiten Arbeitsgang wird das Rillenformwerkzeug in der im ersten Arbeitsgang erreichten axialen Position um einen vorgegebenen Drehwinkel um die Zylinderachse gedreht, wodurch in die Oberfläche Umfangsrillen eingearbeitet werden, die die Axialrillen kreuzen. Die Axialrillen und die Umfangsrillen sind schwalbenschwanzförmig hinterschnitten.

Aus der US 2014/0010977 A1 ist ein Verfahren zum Herstellen einer strukturierten Oberfläche und zum Aufbringen einer Beschichtung bekannt. In die Zylinderwand eines Zylinderblocks werden zunächst Umfangsrillen eingebracht. Anschließend werden mittels eines Rändelwerkzeugs durch plastische Verformung Rillen eingeprägt, die quer zu den Umfangsrillen verlaufen. Beim Erzeugen der Rillen verläuft eine Drehachse des Rändelwerkzeugs parallel zu einer Mittellängsachse der Zylinderbohrung. Die US 2014/0010977 A1 offenbart ein Verfahren bzw. ein Bauteil gemäß dem Oberbegriff des Anspruchs 1 bzw. des Anspruchs 12.

Aus der JP 2006 181608 A ist ein Verfahren zur Mikrobearbeitung der Innenseite einer zylindrischen Wandung bekannt. Eine Werkzeughülse mit Vorsprüngen wird mittels Rollen gegen die zylindrische Wandung gepresst.

Aus der US 3 133 344 A ist ein Verfahren zum Wechseln von Lagerbuchsen in einer Zylinderbohrung bekannt. Nach dem Entfernen einer auszutauschenden Lagerbuchse wird in die Zylinderbohrungswandung eine Rändelung eingeformt, wodurch sich der Innendurchmesser der Zylinderbohrung verringert und eine Austauschbuchse einen Presssitz mit der Zylinderwandung ausbilden kann. Die US 3 133 344 A offenbart ein Werkzeug gemäß dem Oberbegriff des Anspruchs 13.

Der Erfindung liegt die Aufgabe zugrunde, ein Verfahren zum Aufrauen einer zu beschichtenden Zylinderbohrungswandung zu schaffen, das in einfacher Weise eine verbesserte Haftung einer auf die Zylinderbohrungswandung aufzubringenden Beschichtung ermöglicht.

Diese Aufgabe wird durch ein Verfahren mit den Merkmalen des Anspruchs 1 gelöst. In der Zylinderbohrungswandung werden mindestens eine umlaufende Nut und mindestens ein zugehöriger Nutsteg erzeugt. Die mindestens eine Nut wird von dem mindestens einen Nutsteg seitlich begrenzt. Die mindestens eine Nut und der mindestens eine zugehörige Nutsteg sind insbesondere spiralförmig ausgebildet. Das Erzeugen der mindestens einen Nut umfasst vorzugsweise eine spanende Bearbeitung mittels eines spanenden Bearbeitungswerkzeugs und/oder eine plastisch verformende Bearbeitung mittels eines umformenden Bearbeitungswerkzeugs. Das Bearbeitungswerkzeug wird relativ zu dem Bauteil um die Mittellängsachse rotiert und zusätzlich insbesondere entlang der Mittellängsachse linear verlagert. Der mindestens eine Nutsteg ist derart profiliert ausgebildet, dass dieser in einer zu der Mittellängsachse gerichteten radialen Richtung erste Hinterschnitte für die aufzubringende Beschichtung ausbildet. Der Nutsteg wird bei der Erzeugung der mindestens einen Nut profiliert ausgebildet und/oder durch eine plastische Verformung profiliert ausgebildet. Beispielsweise wird die mindestens eine Nut durch ein spanendes Bearbeitungswerkzeug mit einer profilierten Schneide erzeugt, sodass sich die mindestens eine Nut ausgehend von einem Nutgrund in der radialen Richtung verjüngt und der mindestens eine zugehörige Nutsteg zur Ausbildung der ersten Hinterschnitte profiliert ist. Weiterhin wird die mindestens eine Nut beispielsweise mittels eines spanenden Bearbeitungswerkzeugs mit einem rechteckförmigen Querschnitt erzeugt und der mindestens eine zugehörige Nutsteg anschließend derart plastisch verformt, dass dieser in der radialen Richtung die ersten Hinterschnitte ausbildet. Durch die mindestens eine Nut und den mindestens einen zugehörigen Nutsteg hat die aufzubringende Beschichtung eine gute Haftung in der radialen Richtung und in einer zu der Mittellängsachse parallelen axialen Richtung.

Durch das Erzeugen von quer zu der mindestens einen Nut in der Zylinderbohrungswandung verlaufenden Axial-Nuten bildet der mindestens eine Nutsteg zusätzlich in einer Umfangsrichtung um die Mittellängsachse jeweilige zweite Hinterschnitte für die aufzubringende Beschichtung aus. Die quer verlaufenden Axial-Nuten verlaufen insbesondere senkrecht oder unter einem von 90° abweichenden Winkel zu der mindestens einen Nut, sodass die Axial-Nuten die mindestens eine Nut kreuzen. Die Axial-Nuten unterbrechen den mindestens einen Nutsteg zumindest partiell, wobei im Bereich der Unterbrechung die jeweiligen zweiten Hinterschnitte ausgebildet werden. Durch die Axial-Nuten werden somit in der Umfangsrichtung Hinterschnitte bzw. Unterbrechungen erzeugt, die die Haftung der Beschichtung in der Umfangsrichtung verbessern. Dies ist insbesondere vorteilhaft, wenn das Bauteil aus einem Leichtmetall hergestellt ist, beispielsweise aus Aluminium, und das Bauteil und der aufzubringende Beschichtungswerkstoff deutlich unterschiedliche Wärmeausdehnungskoeffizienten haben. Dies ist beispielsweise der Fall, wenn das Bauteil aus einem Leichtmetall hergestellt ist und der Beschichtungswerkstoff eisenhaltig ist. Dadurch, dass sich das Bauteil beim thermischen Beschichten stark erwärmt, entstehen beim Beschichten und dem nachfolgenden Abkühlen mechanische Spannungen. Durch die zweiten Hinterschnitte und die verbesserte Haftung der Beschichtung an der Zylinderbohrungswandung in Umfangsrichtung führen diese Spannungen nicht zu parallel zu der Mittellängsachse verlaufenden Spannungsrissen in der Beschichtung oder Ablösungen der Beschichtung vom Bauteil. Das Bauteil ist insbesondere ein Zylinderkurbelgehäuse oder eine Zylinderlaufbuchse. Sowohl Zylinderlaufbuchsen als auch Zylinderkurbelgehäuse erwärmen sich beim thermischen Beschichten infolge der geringen Masse stark. Die starke Erwärmung betrifft insbesondere auch Zylinderkurbelgehäuse, da diese durch das sogenannte Downsizing und durch die angestrebte Gewichtsreduktion eine vergleichsweise geringe Masse haben.

Dadurch, dass der mindestens eine Nutsteg an mindestens einer der Axial-Nuten, vorzugsweise an mehreren Axial-Nuten, mindestens einen Materialvorsprung ausbildet, wird für die aufzubringende Beschichtung eine vergrößerte Anhaftfläche bereitgestellt. Insbesondere bildet der mindestens eine Nutsteg an allen Axial-Nuten einen jeweiligen Materialvorsprung aus. Werden die Axial-Nuten durch eine plastische Verformung des mindestens einen Nutstegs erzeugt, so werden die zugehörigen Materialvorsprünge durch Materialverdrängung zusammen mit den Axial-Nuten ausgebildet. Der jeweilige Materialvorsprung bildet für die aufzubringende Beschichtung weitere Hinterschnitte aus, sodass die Haftung zusätzlich verbessert wird.

Zunächst wird die mindestens eine in der Zylinderbohrungswandung verlaufende Nut erzeugt, sodass anschließend die Axial-Nuten lediglich in dem mindestens einen Nutsteg erzeugt werden müssen. Die Axial-Nuten werden durch plastische Verformung erzeugt. Die Axial-Nuten werden vorzugsweise derart erzeugt, dass diese über den gesamten Umfang der Zylinderbohrungswandung verteilt sind.

Das Verfahren gewährleistet in einfacher Weise das Erzeugen der Axial-Nuten. Die Axial-Nuten werden durch eine plastische Verformung des mindestens einen Nutstegs erzeugt, indem ein Werkzeug mit mindestens einer Verformungsrolle relativ zu dem Bauteil entlang der Mittellängsachse bewegt wird. Die mindestens eine Verformungsrolle liegt gegen die Zylinderbohrungswandung an und rotiert aufgrund der Linearbewegung des Werkzeugs um die quer, insbesondere senkrecht, zu der Mittellängsachse verlaufende Drehachse, sodass aufgrund einer Anpresskraft eine plastische Verformung des mindestens einen Nutstegs erfolgt.

Nach dem Erzeugen der Hinterschnitte wird die Zylinderbohrungswandung thermisch beschichtet. Beim thermischen Beschichten wird ein Beschichtungswerkstoff aufgebracht, der nach dem Abkühlen die Beschichtung ausbildet. Durch die Hinterschnitte weist die Beschichtung eine verbesserte Haftung in drei Richtungen auf, nämlich in der zu der Mittellängsachse gerichteten radialen Richtung, in der axialen Richtung parallel zu der Mittellängsachse und in der Umfangsrichtung um die Mittellängsachse. Hierdurch werden während und nach dem Beschichten, insbesondere im motorischen Betrieb, Spannungsrisse in der Beschichtung und Abplatzungen von der Beschichtung vermieden. Zudem wird die Haftung der Beschichtung im Bereich der mindestens einen ein- und auslaufenden Nut an der Kopffase und/oder der Fußfase der Zylinderbohrungswandung verbessert.

Vorteilhafte Ausführungsvariante des Verfahrens sind in den abhängigen Ansprüchen 2 bis 11 angegeben.

Ein Verfahren nach Anspruch 2 gewährleistet in einfacher Weise eine verbesserte Haftung der aufzubringenden Beschichtung. Die Nuttiefe T_{N} ist ausgehend von einem Nutgrund der mindestens einen Nut bis zu der Zylinderbohrungswandung definiert. Entsprechend ist die Nuttiefe T_{A} von einem Nutgrund der jeweiligen Axial-Nut bis zu der Zylinderbohrungswandung definiert. Durch das Verhältnis T_{A}/T_{N} wird einerseits eine ausreichend hohe Haftung der Beschichtung in der Umfangsrichtung und andererseits ein einfaches Erzeugen der Axial-Nuten gewährleistet.

Ein Verfahren nach Anspruch 3 gewährleistet in einfacher Weise eine verbesserte Haftung. Dadurch, dass sich die Axial-Nuten jeweils über die gesamte Nutstegbreite erstrecken, weisen die zweiten Hinterschnitte eine größtmögliche Erstreckung auf und stellen der aufzubringenden Beschichtung somit eine große Anhaftfläche bereit. Zudem ist das Erzeugen der Axial-Nuten einfach möglich.

Ein Verfahren nach Anspruch 4 gewährleistet in einfacher Weise eine verbesserte Haftung. Die mindestens eine Nut definiert eine maximale Nutbreite B_{N}. Entsprechend definieren die Axial-Nuten eine maximale Nutbreite B_{A}. Durch das Verhältnis B_{A}/B_{N} wird einerseits gewährleistet, dass die aufzubringende Beschichtung im Bereich der Axial-Nuten eine ausreichende Materialdicke und somit eine ausreichende Festigkeit hat, sodass eine verbesserte Haftung in der Umfangsrichtung erzielbar ist. Andererseits wird durch das Verhältnis B_{A}/B_{N} ein einfaches Erzeugen der Axial-Nuten gewährleistet.

Ein Verfahren nach Anspruch 5 gewährleistet in einfacher Weise eine verbesserte Haftung. Durch einen kleinen Winkel α wird einerseits gewährleistet, dass die Axial-Nuten im Wesentlichen senkrecht zu der Umfangsrichtung verlaufen. Andererseits gewährleistet der Winkel α ein einfaches und schnelles Erzeugen der Axial-Nuten, beispielsweise durch eine Axialbewegung und eine gegebenenfalls überlagerte Rotationsbewegung eines Werkzeugs relativ zu dem Bauteil.

Ein Verfahren nach Anspruch 6 gewährleistet ein einfaches Erzeugen der mindestens einen Nut und des mindestens einen zugehörigen Nutstegs. Die mindestens eine Nut wird durch eine kombinierte Linear- und Rotationsbewegung eines spanenden Bearbeitungswerkzeugs erzeugt. Die Ausbildung des ersten Hinterschnitts erfolgt durch eine profilierte Schneide des spanenden Bearbeitungswerkzeugs und/oder durch eine plastische Verformung mittels eines umformenden Bearbeitungswerkzeugs.

Ein Verfahren nach Anspruch 7 gewährleistet in einfacher Weise eine verbesserte Haftung. Der Winkelabstand korrespondiert mit der Anzahl der Axial-Nuten. Je kleiner der Winkelabstand ist, desto größer ist die Anzahl der Axial-Nuten. Der Winkelabstand ist so gewählt, dass einerseits ausreichend viele Axial-Nuten über den gesamten Umfang der Zylinderbohrungswandung verteilt sind. Andererseits ist der Winkelabstand so gewählt, dass der mindestens eine Nutsteg zwischen zwei benachbarten Axial-Nuten eine ausreichende Materialdicke und somit eine ausreichende Festigkeit aufweist. Durch den Winkelabstand wird somit eine verbesserte Haftung für die aufzubringende Beschichtung in der Umfangsrichtung gewährleistet.

Ein Verfahren nach Anspruch 8 gewährleistet in einfacher Weise eine verbesserte Haftung. Die Axial-Nuten weisen einen Querschnitt auf, der sich ausgehend von dem mindestens einen Nutsteg in Richtung des Nutgrunds der jeweiligen Axial-Nut verjüngt. Hierdurch wird gewährleistet, dass das aufzubringende Beschichtungsmaterial bis zu dem Nutgrund in die jeweilige Axial-Nut eindringen kann. Weiterhin sind Axial-Nuten mit einem sich verjüngenden Querschnitt einfach herstellbar, beispielsweise durch eine plastische Verformung des mindestens einen Nutstegs.

Ein Verfahren nach Anspruch 9 gewährleistet in einfacher Weise eine verbesserte Haftung. Der mindestens eine Nutsteg ist spiralförmig oder umlaufend ausgebildet und weist mehrere sich in der Umfangsrichtung über 360° erstreckende Nutsteg-Windungen auf. Die in den Nutsteg-Windungen entlang einer Geraden ausgerichteten Axial-Nuten werden in einfacher Weise durch eine Linearbewegung eines Werkzeugs entlang der Mittellängsachse erzeugt.

Ein Verfahren nach Anspruch 10 gewährleistet in einfacher Weise eine verbesserte Haftung. Durch die radial zu dem Werkzeug-Grundkörper verlagerbare mindestens eine Verformungsrolle wird die Anpresskraft der mindestens einen Verformungsrolle, mit der diese gegen die Zylinderbohrungswandung anliegt, in einfacher Weise eingestellt. Hierdurch können die Axial-Nuten mit einer einstellbaren Nuttiefe erzeugt werden.

Ein Verfahren nach Anspruch 11 gewährleistet ein einfaches und schnelles Erzeugen der Axial-Nuten zur Verbesserung der Haftung. Durch eine erste Linearbewegung des Werkzeugs relativ zu dem Bauteil wird zunächst ein erster Teil der Axial-Nuten durch plastische Verformung der Zylinderbohrungswandung, insbesondere des mindestens einen Nutstegs, erzeugt. Befindet sich die mindestens eine Verformungsrolle außer Eingriff mit der Zylinderbohrungswandung, wird das Werkzeug um einen Schwenkwinkel verschwenkt. Anschließend wird durch eine zweite Linearbewegung ein zweiter Teil der Axial-Nuten erzeugt. Das Verschwenken und das anschließende Erzeugen der Axial-Nuten wird insbesondere so lange wiederholt, bis die Axial-Nuten entlang des gesamten Umfangs der Zylinderbohrungswandung erzeugt wurden. Die Linearbewegungen können durch eine Rotationsbewegung überlagert sein, sodass die Axial-Nuten mit der Mittellängsachse einen Winkel α einschließen. Aufeinander folgende Linearbewegungen weisen insbesondere eine entgegengesetzte Richtung auf.

Der Erfindung liegt ferner die Aufgabe zugrunde, ein Bauteil zum Führen eines Zylinderkolbens zu schaffen, das in einfacher Weise eine verbesserte Haftung einer auf die Zylinderbohrungswandung aufzubringenden Beschichtung ermöglicht.

Diese Aufgabe wird durch ein Bauteil mit den Merkmalen des Anspruchs 12 gelöst. Die Vorteile des erfindungsgemäßen Bauteils entsprechen den bereits beschriebenen Vorteilen des erfindungsgemäßen Verfahrens. Das erfindungsgemäße Bauteil kann insbesondere auch mit den Merkmalen mindestens eines der Ansprüche 1 bis 11 weitergebildet werden. Das Bauteil ist beispielsweise ein Zylinderkurbelgehäuse oder eine Zylinderlaufbuchse. Der mindestens eine Nutsteg ist spiralförmig oder umlaufend ausgebildet und weist mehrere sich in der Umfangsrichtung über 360° erstreckende Nutsteg-Windungen auf. Die in den Nutsteg-Windungen entlang einer Geraden ausgerichteten Axial-Nuten werden in einfacher Weise durch eine Linearbewegung eines Werkzeugs entlang der Mittellängsachse erzeugt.

Der Erfindung liegt ferner die Aufgabe zugrunde, ein Werkzeug zum Aufrauen einer zu beschichtenden Zylinderbohrungswandung zu schaffen, dass in einfacher Weise eine verbesserte Haftung einer auf die Zylinderbohrungswandung aufzubringenden Beschichtung ermöglicht.

Diese Aufgabe wird durch ein Werkzeug mit den Merkmalen des Anspruchs 13 gelöst. Mittels des erfindungsgemäßen Werkzeugs können in einfacher Weise in der Zylinderbohrungswandung Axial-Nuten erzeugt werden. Die erzeugten Axial-Nuten ermöglichen eine verbesserte Haftung der auf die Zylinderbohrungswandung aufzubringenden Beschichtung in der Umfangsrichtung um eine Mittellängsachse der Zylinderbohrung. Das Werkzeug wird vorzugsweise derart in die Zylinderbohrung eingeführt, dass die Grundkörper-Mittellängsachse parallel, insbesondere konzentrisch zu der Mittellängsachse der Zylinderbohrung verläuft. Die mindestens eine Verformungsrolle liegt im eingeführten Zustand gegen die Zylinderbohrungswandung an. Durch eine Linearbewegung des Werkzeugs in Richtung der Mittellängsachse werden mittels der mindestens einen Verformungsrolle die Axial-Nuten durch plastische Verformung der Zylinderbohrungswandung erzeugt. Hierbei liegt die mindestens eine Verformungsrolle mit einer Anpresskraft gegen die Zylinderbohrungswandung an und rotiert infolge der Linearbewegung um eine quer zu der Grundkörper-Mittellängsachse verlaufende zugehörige Drehachse. Vorzugsweise weist das Werkzeug mehrer Verformungsrollen auf, die über den Umfang des Werkzeug-Grundkörpers verteilt an diesem drehbar angeordnet sind. Das erfindungsgemäße Werkzeug ermöglicht ein einfaches Erzeugen der Axial-Nuten in der Zylinderbohrungswandung durch plastische Verformung.

Ein Werkzeug nach Anspruch 14 gewährleistet eine verbesserte Haftung. Dadurch, dass die mindestens eine Verformungsrolle radial zu der Grundkörper-Mittellängsachse verlagerbar ist, ist die Anpresskraft einstellbar, sodass die Nuttiefe der jeweiligen Axial-Nut einstellbar ist.

Weitere Merkmale, Vorteile und Einzelheiten der Erfindung ergeben sich aus der nachfolgenden Beschreibung mehrerer Ausführungsbeispiele. Es zeigen:
- Fig. 1: eine abschnittsweise Draufsicht auf ein Bauteil zum Führen eines Zylinderkolbens mit einer eine Zylinderbohrung begrenzenden Zylinderbohrungswandung gemäß einem ersten Ausführungsbeispiel,
- Fig. 2: eine perspektivische Ansicht der Zylinderbohrungswandung mit einer spiralförmigen Nut und einem zugehörigen Nutsteg sowie mit quer dazu verlaufenden Axial-Nuten, wobei die Zylinderbohrungswandung zur besseren Veranschaulichung in einer Ebene dargestellt ist,
- Fig. 3: eine Draufsicht auf die Zylinderbohrungswandung gemäß Fig. 2,
- Fig. 4: einen Schnitt durch die Zylinderbohrungswandung entlang der Schnittlinie IV-IV in Fig. 3,
- Fig. 5: einen Schnitt durch die Zylinderbohrungswandung entlang der Schnittlinie V-V in Fig. 3,
- Fig. 6: eine perspektivische Ansicht einer Zylinderbohrungswandung gemäß einem zweiten Ausführungsbeispiel, wobei die Zylinderbohrungswandung entsprechend Fig. 2 in einer Ebene dargestellt ist,

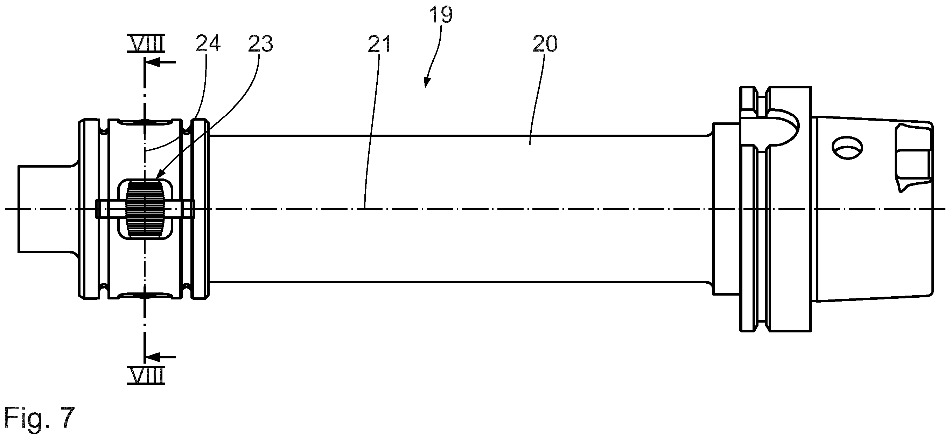

- Fig. 7: eine Seitenansicht eines Werkzeugs zum Aufrauen der Zylinderbohrungswandung und zum Erzeugen der Axial-Nuten, und
- Fig. 8: einen Schnitt durch das Werkzeug entlang der Schnittlinie VIII-VIII in Fig. 7.

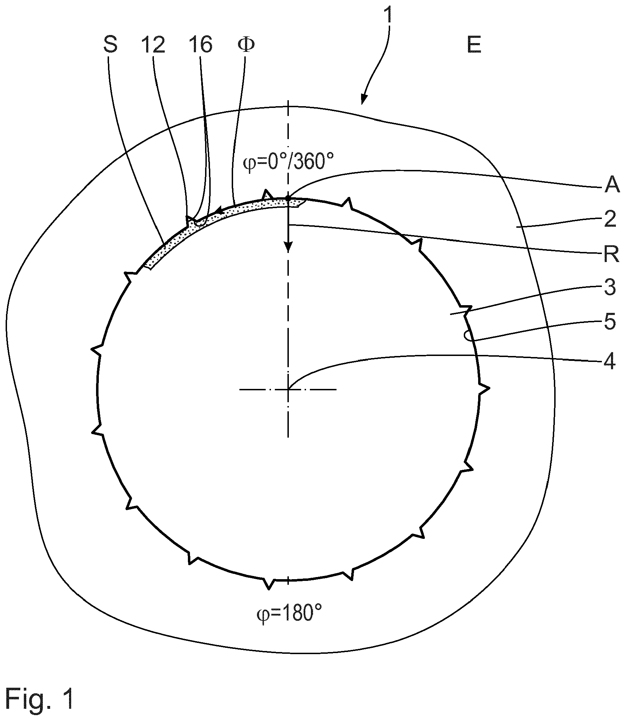

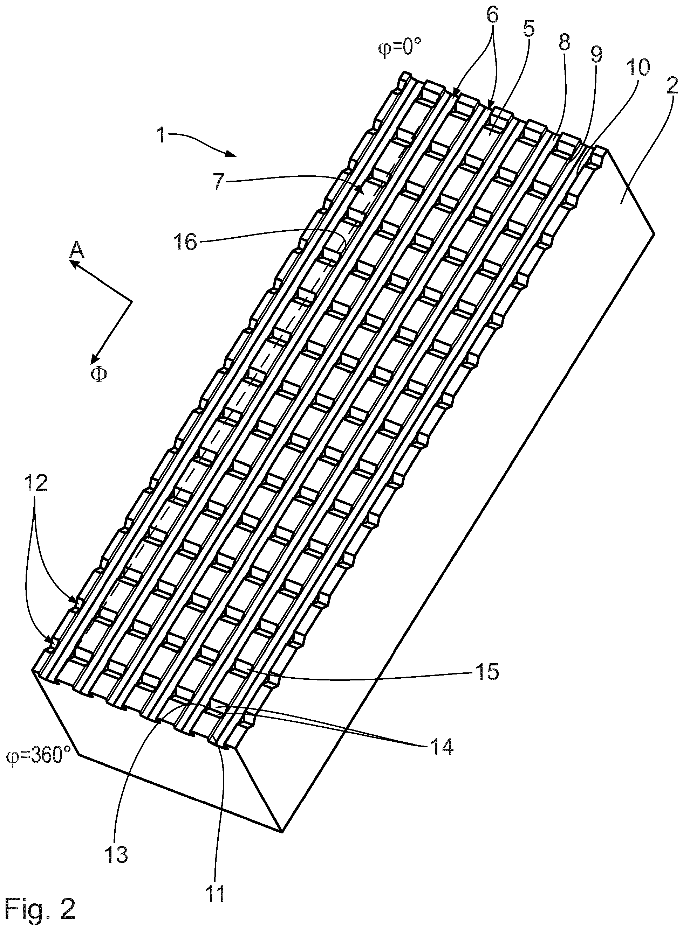

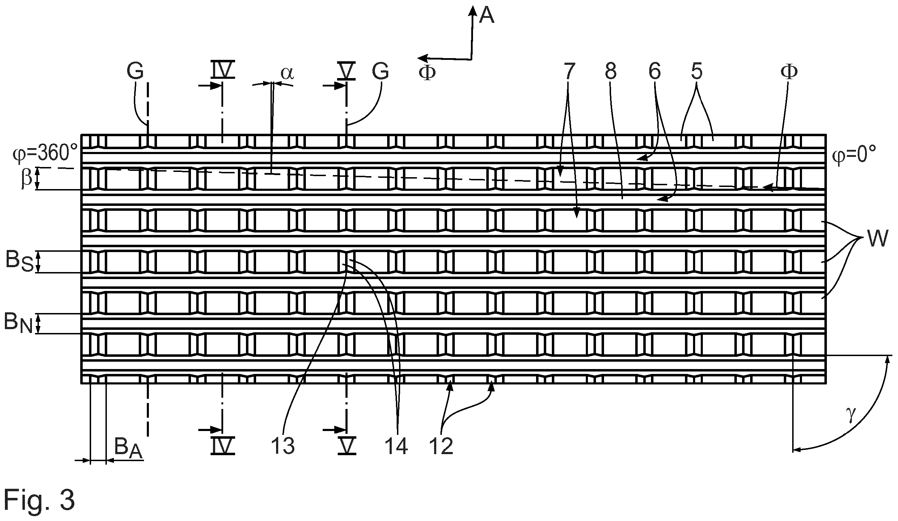

Nachfolgend ist anhand der Fig. 1 bis 5 ein erstes Ausführungsbeispiel der Erfindung beschrieben. Ein Bauteil 1 zum Führen eines Zylinderkolbens weist einen Grundkörper 2 auf, in dem mindestens eine Zylinderbohrung 3 ausgebildet ist. Die Zylinderbohrung 3 weist eine Mittellängsachse 4 auf. Die Zylinderbohrung 3 wird durch eine Zylinderbohrungswandung 5 begrenzt, die um die Mittellängsachse 4 verläuft. Das Bauteil 1 ist beispielsweise ein Zylinderkurbelgehäuse oder eine Zylinderlaufbuchse eines Verbrennungsmotors. Das Bauteil 1 bzw. der Grundkörper 2 ist vorzugsweise aus einem Leichtmetall, insbesondere aus Aluminium ausgebildet.

In der Zylinderbohrungswandung 5 ist eine spiralförmig um die Mittellängsachse 4 verlaufende Nut 6 ausgebildet, die von einem zugehörigen spiralförmig verlaufenden Nutsteg 7 begrenzt ist. Die Zylinderbohrungswandung 5 definiert eine Umfangsrichtung Φ, die in einer Ebene E verläuft, die wiederum senkrecht zu der Mittellängsachse 4 verläuft. Eine Position in der Umfangsrichtung Φ wird durch den Winkel ϕ charakterisiert. Die Nut 6 schließt mit der Umfangsrichtung Φ einen Spiralwinkel β ein, wobei für den Spiralwinkel β gilt: 0° < β < 4°, insbesondere 0,1° ≤ β ≤ 3°, und insbesondere 0,2° ≤ β ≤ 2°.

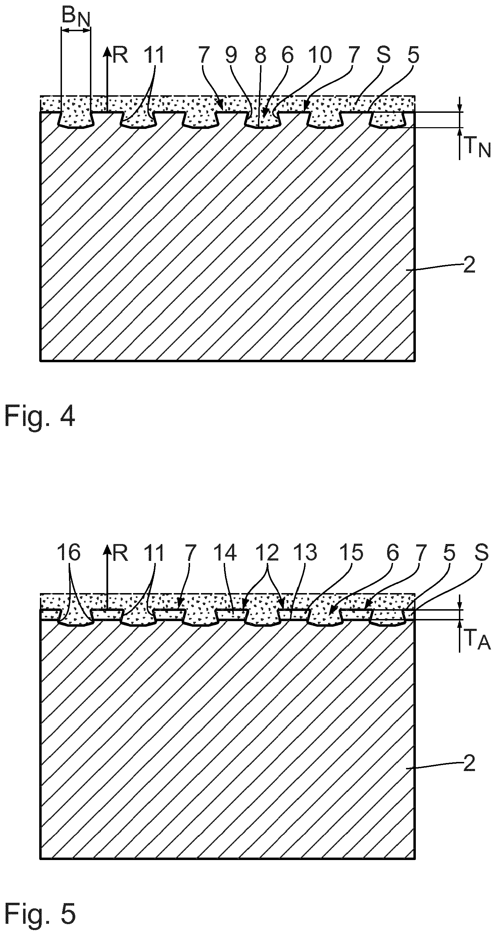

Die Nut 6 weist einen Nutgrund 8 und seitlich davon angeordnete Nutflanken 9, 10 auf. Der Nutgrund 8 definiert eine Nuttiefe T_{N} relativ zu der Zylinderbohrungswandung 5. Die Nutflanken 9, 10 definieren zwischen sich eine Nutbreite B_{N}. Die Nutbreite B_{N} vergrößert sich in Richtung des Nutgrunds 8, sodass die Nutflanken 9, 10 in einer zu der Mittellängsachse 4 gerichteten radialen Richtung R erste Hinterschnitte 11 für eine aufzubringende Beschichtung S ausbilden. Dies ist in Fig. 4 veranschaulicht. Die Nutflanken 9, 10 bilden gleichzeitig die Nutsteg-Seitenwände aus. Die aufzubringende Beschichtung S ist in den Figuren 1, 4 und 5 angedeutet.

In der Zylinderbohrungswandung 5 sind weiterhin Axial-Nuten 12 ausgebildet. Die Axial-Nuten 12 verlaufen quer zu der Nut 6 und sind somit in dem Nutsteg 7 ausgebildet. Die Axial-Nuten 12 verlaufen insbesondere parallel zueinander und/oder senkrecht zu der Nut 6. Die Axial-Nuten 12 schließen mit der Mittellängsachse 4 einen Winkel α ein, wobei gilt: -60° ≤ α ≤ 60°, insbesondere -20° ≤ α ≤ 20°, und insbesondere -10° ≤ α ≤ 10°. Die Axial-Nuten 12 schließen mit der mindestens einen Nut 6 einen Winkel γ ein, wobei vorzugsweise gilt: 30° ≤ γ ≤ 150°, insbesondere 70° ≤ γ ≤ 110°, und insbesondere 80° ≤ γ ≤ 100°.

Die Axial-Nuten 12 haben einen Querschnitt, der sich in Richtung eines jeweiligen Nutgrunds 13 verjüngt und keilförmig ausgebildet ist. Die Axial-Nuten 12 haben ausgehend von dem jeweiligen Nutgrund 13 bis zu der Zylinderbohrungswandung 5 eine Nuttiefe T_{A}. Für das Verhältnis der Nuttiefen T_{A}/T_{N} gilt: 0,05 ≤ T_{A}/T_{N} ≤ 2, insbesondere 0,1 ≤ T_{A}/T_{N} ≤ 1, und insbesondere 0,2 ≤ T_{A}/T_{N} ≤ 0,9. Ferner weisen die Axial-Nuten 12 jeweilige Nutflanken 14 auf. Zwischen den jeweiligen Nutflanken 14 haben die Axial-Nuten 12 eine jeweilige Nutbreite B_{A}. Für das Verhältnis der maximalen Nutbreiten B_{A}/B_{N} gilt: 0,05 ≤ B_{A}/B_{N} ≤ 2, insbesondere 0,2 ≤ B_{A}/B_{N} ≤ 1,5, und insbesondere 0,4 ≤ B_{A}/B_{N} ≤ 1.

Der Nutsteg 7 weist in der Umfangsrichtung Φ mehrere sich jeweils über 360° erstreckende Nutsteg-Windungen W auf. Die Axial-Nuten 12 sind entlang von Geraden G in den Nutsteg-Windungen W ausgebildet. Der Nutsteg 7 hat eine Nutstegbreite Bs. Die Axial-Nuten 12 erstrecken sich somit über die gesamte Nutstegbreite Bs. Die Axial-Nuten 12 sind in der Umfangsrichtung Φ beabstandet zueinander angeordnet. Die Axial-Nuten 12 sind insbesondere in der Umfangsrichtung Φ über den gesamten Umfang der Zylinderbohrungswandung 5 verteilt. Die Axial-Nuten 12 haben einen Winkelabstand Δϕ, wobei gilt: 0,5° ≤ Δϕ ≤ 24°, insbesondere 0,5° ≤ Δcp ≤ 15°, und insbesondere 0,5° < Δcp ≤ 2°. Vorzugsweise verlaufen die Axial-Nuten 12 entlang der Geraden G und/oder in der Umfangsrichtung Φ benachbarte Axial-Nuten 12 parallel zueinander.

Die Nutflanken 14 der jeweiligen Axial-Nut 12 bilden für die aufzubringende Beschichtung S in der Umfangsrichtung Φ jeweilige zweite Hinterschnitt 15 aus. Die Nutflanken 14 bilden zugleich Nutsteg-Wände aus, die für eine aufzubringende Beschichtung S eine Anhaftung in der Umfangsrichtung Φ ermöglichen. Dies ist in Fig. 5 veranschaulicht.

In einer axialen Richtung A, die parallel zu der Mittellängsachse 4 verläuft, bildet die Nut 6 weiterhin dritte Hinterschnitte 16 aus. Die dritten Hinterschnitte 16 werden insbesondere durch die Nutflanken 9, 10 gebildet, die zugleich Nutsteg-Seitenwände sind. Dies ist in Fig. 5 veranschaulicht.

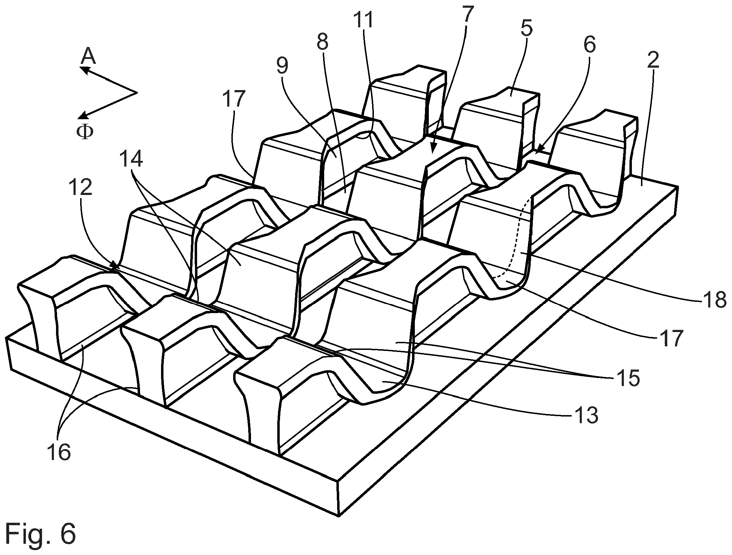

Nachfolgend ist anhand von Fig. 6 ein zweites Ausführungsbeispiel der Erfindung beschrieben. Im Unterschied zu dem Bauteil 1 gemäß dem ersten Ausführungsbeispiel bildet der Nutsteg 7 an den Axial-Nuten 12 jeweilige Materialvorsprünge 17 aus, die sich in die Nut 6 erstrecken. Die Materialvorsprünge 17 bilden in der Umfangsrichtung Φ jeweilige vierte Hinterschnitte 18 für die aufzubringende Beschichtung S aus. Hinsichtlich des weiteren Aufbaus und der weiteren Funktionsweise des erfindungsgemäßen Bauteils 1 wird auf das vorangegangene Ausführungsbeispiel verwiesen.

Nachfolgend ist ein Verfahren zum Aufrauen der zu beschichtenden Zylinderbohrungswandung 5 beschrieben:
In der Zylinderbohrungswandung 5 werden die spiralförmig verlaufende Nut 6 und der zugehörige Nutsteg 7 erzeugt. Hierzu wird ein Bearbeitungswerkzeug in die Zylinderbohrung 3 eingeführt, das relativ zu dem Bauteil 1 um die Mittellängsachse 4 rotiert und gleichzeitig entlang der Mittellängsachse 4 linear bewegt wird. Das Bearbeitungswerkzeug ist als spanendes Bearbeitungswerkzeug und/oder umformendes Bearbeitungswerkzeug ausgebildet. Die Nut 6 wird dementsprechend durch eine spanende Bearbeitung und/oder eine plastische Verformung der Zylinderbohrungswandung 5 erzeugt. Die Nut 6 wird beispielsweise ausschließlich durch eine spanende Bearbeitung mittels eines spanenden Bearbeitungswerkzeugs mit einer profilierten Schneide erzeugt. Die ersten Hinterschnitte 11 werden insbesondere durch die profilierte Schneide des spanenden Bearbeitungswerkzeugs und/oder durch das umformende Bearbeitungswerkzeug erzeugt. Der Spiralwinkel β wird durch das Verhältnis der Rotationsgeschwindigkeit zu der Lineargeschwindigkeit des Bearbeitungswerkzeugs eingestellt.

Weiterhin werden die Axial-Nuten 12 erzeugt. Hierzu wird ein Werkzeug 19, das nachfolgend auch als Aufrau-Werkzeug bezeichnet ist, in die Zylinderbohrung 3 eingeführt und zum Erzeugen der Axial-Nuten 12 relativ zu dem Bauteil 1 entlang der Mittellängsachse 4 bewegt. Zusätzlich kann das Aufrau-Werkzeug 19 um die Mittellängsachse 4 rotiert werden, sodass die Axial-Nuten 12 mit der Mittellängsachse 4 den Winkel α einschließen.

Das Erzeugen der Axial-Nuten 12 kann vor oder nach dem Erzeugen der Nut 6 erfolgen. Vorzugsweise erfolgt das Erzeugen der Axial-Nuten 12 nach dem Erzeugen der Nut 6. Das Erzeugen der Axial-Nuten 12 kann durch eine spanende Bearbeitung und/oder durch Energiestrahlen und/oder durch plastische Verformung erfolgen. Erfindungsgemäß erfolgt das Erzeugen der Axial-Nuten 12 durch eine plastische Verformung des Nutstegs 7. Nachfolgend ist ein Aufrau-Werkzeug 19 zum Erzeugen der Axial-Nuten 12 durch plastische Verformung der Zylinderbohrungswandung 5 sowie ein entsprechendes Verfahren zum Aufrauen der Zylinderbohrungswandung 5 beschrieben. Das Aufrau-Werkzeug 19 weist einen im Wesentlichen zylindrischen Werkzeug-Grundkörper 20 auf, der an einem maschinenseitigen Ende in üblicher Weise zum Spannen in eine Werkzeugspindel einer Werkzeugmaschine ausgebildet ist. Der Werkzeug-Grundkörper 20 weist eine Grundkörper-Mittellängsachse 21 auf, entlang der eine Betätigungsstange 22 innerhalb des Werkzeug-Grundkörpers 20 axial verlagerbar gelagert ist. An einem werkstückseitigen Ende sind an dem Werkzeug-Grundkörper 20 umfangsseitig mehrere Verformungsrollen 23 um eine jeweils zugehörige Drehachse 24 drehbar gelagert. Das Aufrau-Werkzeug 19 weist beispielsweise vier Verformungsrollen 23 auf. Die Drehachsen 24 verlaufen senkrecht zu der Grundkörper-Mittellängsachse 21. Die Verformungsrollen 23 sind mittels der Betätigungsstange 22 radial zu der Grundkörper-Mittellängsachse 21 verlagerbar. Hierzu ist die Betätigungsstange 22 beispielsweise konisch ausgebildet, sodass eine Linearbewegung der Betätigungsstange 22 entlang der Grundkörper-Mittellängsachse 21 in einer Radialbewegung der Verformungsrollen 23 resultiert. Eine alternative Ausführungsform des Aufrau-Werkzeugs 19 weist anstelle der Betätigungsstange 22 federnd an dem Werkzeug-Grundkörper 20 gelagerte Verformungsrollen 23 auf, sodass diese radial zu der Grundkörper-Mittelachse 21 verlagerbar sind. Durch eine radiale Verlagerung der Verformungsrollen 23 ist eine Anpresskraft der Verformungsrollen 23 an die Zylinderbohrungswandung 5 einstellbar.

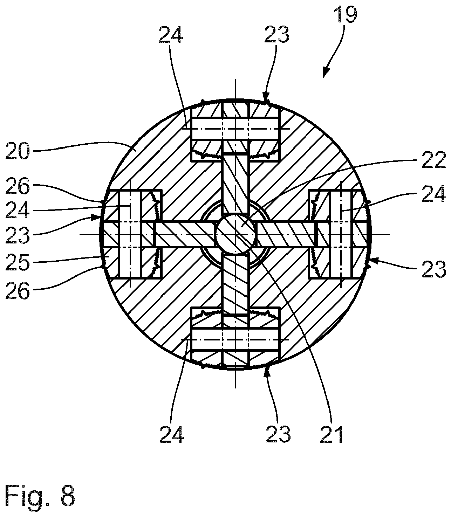

Die jeweilige Verformungsrolle 23 weist einen Rollen-Grundkörper 25 auf, an dem mindestens ein um die Drehachse 24 umlaufender Verformungsvorsprung 26 ausgebildet ist. In Fig. 8 sind beispielhaft mehrere Verformungsvorsprünge 26 dargestellt. Die Verformungsvorsprünge 26 dienen zum plastischen Verformen der Zylinderbohrungswandung 5 bzw. des Nutstegs 7. Dementsprechend sind die Verformungsvorsprünge 26 entsprechend dem gewünschten Querschnitt der Axial-Nuten 12 ausgebildet.

Nachfolgend ist das Erzeugen der Axial-Nuten 12 mittels des Aufrau-Werkzeugs 19 beschrieben:
Das Aufrau-Werkzeug 19 wird in die Zylinderbohrung 3 eingeführt. Die Verformungsrollen 23 sind mittels der Betätigungsstange 22 oder einer Federeinrichtung derart radial verlagert, dass diese mit einer gewünschten Anpresskraft gegen die Zylinderbohrungswandung 5 anliegen. Das Aufrau-Werkzeug 19 wird relativ zu dem Bauteil 1 linear in Richtung der Mittellängsachse 4 verlagert. Zusätzlich kann der Linearbewegung eine Rotationsbewegung des Aufrau-Werkzeugs relativ zu dem Bauteil 1 überlagert sein. Durch die Verformungsvorsprünge 26 der Verformungsrollen 23 wird die Zylinderbohrungswandung 5 bzw. der Nutsteg 7 plastisch verformt, sodass ein erster Teil der Axial-Nuten 12 erzeugt wird. Durch die Anpresskraft wird die Nuttiefe T_{A} und die Nutbreite B_{A} der keilförmigen Axial-Nuten 12 eingestellt. Wurde der erste Teil der Axial-Nuten 12 erzeugt, so wird das Aufrau-Werkzeug 19 außer Eingriff mit der Zylinderbohrungswandung 5 gebracht. Dies erfolgt beispielsweise dadurch, dass sich das Aufrau-Werkzeug 19 außerhalb der Zylinderbohrung 3 befindet oder die Verformungsrollen 23 durch Verlagern der Betätigungsstange 22 nicht länger plastisch verformend gegen die Zylinderbohrungswandung 5 anliegen. Anschließend wird das Aufrau-Werkzeug 19 um die Grundkörper-Mittellängsachse 21 verschwenkt, sodass die Verformungsrollen 23 in einem Bereich der Zylinderbohrungswandung 5 angeordnet werden, in der noch keine Axial-Nuten 12 erzeugt wurden.

Anschließend wird ein zweiter Teil der Axial-Nuten 12 erzeugt. Hierzu sind die Verformungsrollen 23 mittels der Betätigungsstange 22 oder einer Federeinrichtung radial nach außen verlagert, sodass diese mit der gewünschten Anpresskraft gegen die Zylinderbohrungswandung 5 anliegen. Anschließend wird das Aufrau-Werkzeug 19 wieder linear entlang der Mittellängsachse 4 verlagert, sodass die Verformungsvorsprünge 26 die Zylinderbohrungswandung 5 plastisch verformen und den zweiten Teil der Axial-Nuten 12 erzeugen. Die Linearbewegung des Aufrau-Werkzeugs 19 kann wiederum durch eine Rotationsbewegung überlagert sein. Vorzugsweise wird der erste Teil der Axial-Nuten 12 durch Verlagerung in eine erste Richtung erzeugt, wohingegen der zweite Teil der Axial-Nuten 12 durch eine Verlagerung in einer entgegen gesetzten zweite Richtung erzeugt wird. Durch die plastische Verformung des Nutstegs 7 wird das Material des Grundkörpers 2 in die Nut 6 verlagert, sodass die Materialvorsprünge 17 entstehen. Durch das Aufrau-Werkzeug 19 können die Axial-Nuten 12 und die Materialvorsprünge 17 somit in einfacher Weise erzeugt werden.

Für die nachfolgend aufzubringende Beschichtung S, die beispielhaft in den Fig. 1, 4 und 5 angedeutet ist, bildet die Nut 6 und der zugehörige Nutsteg 7 sowie die Axial-Nuten 12 Hinterschnitte 11, 15, 16 und 18 aus, sodass die Beschichtung S eine gute Anhaftung in der radialen Richtung R, in der axialen Richtung A und insbesondere auch in der Umfangsrichtung Φ hat. Durch die Axial-Nuten 12 und die Materialvorsprünge 17 wird insbesondere die Anhaftung in der Umfangsrichtung Φ deutlich verbessert, sodass thermisch bedingte Spannungsrisse oder Ablösungen wirkungsvoll vermieden werden. Durch das thermische Beschichten und/oder im motorischen Betrieb unterliegt das Bauteil 1 großen Temperaturschwankungen. Die Temperaturschwankungen sind insbesondere deshalb ausgeprägt, da das Bauteil 1 eine geringe Masse hat. Zudem ist das Bauteil 1 aus einem Leichtmetall und weist deshalb im Vergleich zu der eisenhaltigen Beschichtung S einen deutlich größeren Wärmeausdehnungskoeffizienten auf. Das erfindungsgemäße Bauteil 1 sowie das erfindungsgemäße Verfahren zum Aufrauen ermöglicht somit eine deutlich verbesserte Haftung der auf die Zylinderbohrungswandung 5 aufzubringenden Beschichtung S.

## Patentansprüche

1. Verfahren zum Aufrauen einer zu beschichtenden Zylinderbohrungswandung, umfassend die folgenden Schritte:
- Bereitstellen eines Bauteils (1) mit einer Zylinderbohrung (3) und einer um eine Mittellängsachse (4) verlaufende Zylinderbohrungswandung (5),
- Erzeugen mindestens einer um die Mittellängsachse (4) in der Zylinderbohrungswandung (5) verlaufenden Nut (6) und mindestens eines zugehörigen Nutstegs (7) derart, dass der mindestens eine Nutsteg (7) in einer zu der Mittellängsachse (4) gerichteten radialen Richtung (R) erste Hinterschnitte (11) für eine aufzubringende Beschichtung (S) ausbildet, und
- Erzeugen von quer zu der mindestens einen Nut (6) in der Zylinderbohrungswandung (5) verlaufenden Axial-Nuten (12) derart, dass der mindestens eine Nutsteg (7) in einer Umfangsrichtung (Φ) um die Mittellängsachse (4) jeweilige zweite Hinterschnitte (15) für die aufzubringende Beschichtung (S) ausbildet und der mindestens eine Nutsteg (7) an mindestens einer der Axial-Nuten (12) mindestens einen Materialvorsprung (17) ausbildet, der sich in die mindestens eine Nut (6) erstreckt und in der Umfangsrichtung (Φ) einen jeweiligen weiteren Hinterschnitt (18) für die aufzubringende Beschichtung (S) ausbildet,
**dadurch gekennzeichnet,**
**dass** zum Erzeugen der Axial-Nuten (12) ein Werkzeug (19) mit mindestens einer Verformungsrolle (23) entlang der Mittellängsachse (4) bewegt wird und die mindestens eine Verformungsrolle (23) um eine quer zu der Mittellängsachse (4) verlaufende Drehachse (24) derart an der Zylinderbohrungswandung (5) rotiert, dass die mindestens eine Verformungsrolle (23) den mindestens einen Nutsteg (7) zur Ausbildung der Axial-Nuten (12) plastisch verformt.

2. Verfahren nach Anspruch 1, **dadurch gekennzeichnet,**
**dass** die mindestens eine Nut (6) eine Nuttiefe T_{N} und die Axial-Nuten (12) eine Nuttiefe T_{A} haben, wobei gilt: 0,05 ≤ T_{A}/T_{N} ≤ 2, insbesondere 0,1 ≤ T_{A}/T_{N} ≤ 1, und insbesondere 0,2 ≤ T_{A}/T_{N} ≤ 0,9.

3. Verfahren nach Anspruch 1 oder 2, **dadurch gekennzeichnet,**
**dass** der mindestens eine Nutsteg (7) eine Nutstegbreite (Bs) hat und sich die Axial-Nuten (12) über die gesamte Nutstegbreite (Bs) erstrecken.

4. Verfahren nach einem der Ansprüche 1 bis 3, **dadurch gekennzeichnet,**
**dass** die mindestens eine Nut (6) eine Nutbreite B_{N} und die Axial-Nuten (12) eine Nutbreite B_{A} haben, wobei gilt: 0,05 ≤ B_{A}/B_{N} ≤ 2, insbesondere 0,2 ≤ B_{A}/B_{N} ≤ 1,5, und insbesondere 0,4 ≤ B_{A}/B_{N} ≤ 1.

5. Verfahren nach einem der Ansprüche 1 bis 4, **dadurch gekennzeichnet,**
**dass** die Axial-Nuten (12) mit der Mittellängsachse (4) einen Winkel α einschließen, wobei gilt: -60° ≤ α ≤ 60°, insbesondere -20° ≤ α ≤ 20°, und insbesondere - 10° ≤ α ≤ 10°.

6. Verfahren nach einem der Ansprüche 1 bis 5, **dadurch gekennzeichnet,**
**dass** das Erzeugen der mindestens einen Nut (6) eine spanende Bearbeitung umfasst und/oder die mindestens eine Nut (6) einen Spiralwinkel β aufweist, wobei gilt: 0° < β < 4°, insbesondere 0,1° ≤ β ≤ 3°, und insbesondere 0,2° ≤ β ≤ 2°.

7. Verfahren nach einem der Ansprüche 1 bis 6, **dadurch gekennzeichnet,**
**dass** in der Umfangsrichtung (Φ) benachbarte Axial-Nuten (12) einen Winkelabstand Δϕ haben, wobei gilt: 0,5° <_ Δcp ≤ 24°, insbesondere 0,5° ≤ Δϕ ≤ 15°, und insbesondere 0,5° ≤ Δϕ ≤ 2°.

8. Verfahren nach einem der Ansprüche 1 bis 7, **dadurch gekennzeichnet,**
**dass** die Axial-Nuten (12) einen sich verjüngenden Querschnitt haben, der insbesondere keilförmig ausgebildet ist.

9. Verfahren nach einem der Ansprüche 1 bis 8, **dadurch gekennzeichnet,**
**dass** der mindestens eine Nutsteg (7) mehrere sich in der Umfangsrichtung (Φ) über 360° erstreckende Nutsteg-Windungen (W) aufweist und die in den Nutsteg-Windungen (W) ausgebildeten Axial-Nuten (12) entlang von Geraden (G) ausgerichtet sind.

10. Verfahren nach einem der Ansprüche 1 bis 9, **dadurch gekennzeichnet,**
**dass** die mindestens eine Verformungsrolle (23) an einem Werkzeug-Grundkörper (20) drehbar gelagert und relativ zu dem Werkzeug-Grundkörper (20) radial verlagerbar ist.

11. Verfahren nach einem der Ansprüche 1 bis 10, **dadurch gekennzeichnet,**
**dass** das Erzeugen der Axial-Nuten (12) folgende Schritte umfasst:
- Bewegen des Werkzeugs (19) mit der mindestens einen Verformungsrolle (23) entlang der Mittellängsachse (4) derart, dass die mindestens eine Verformungsrolle (23) die Zylinderbohrungswandung (5), insbesondere den mindestens einen Nutsteg (7), zur Ausbildung eines ersten Teils der Axial-Nuten (12) plastisch verformt,
- Verschwenken des Werkzeugs (19), wenn die mindestens eine Verformungsrolle (23) außer Eingriff mit der Zylinderbohrungswandung (5) ist, und
- Bewegen des Werkzeugs (19) entlang der Mittellängsachse (4) derart, dass die mindestens eine Verformungsrolle (23) die Zylinderbohrungswandung (5), insbesondere den mindestens einen Nutsteg (7), zur Ausbildung eines zweiten Teils der Axial-Nuten (12) plastisch verformt.

12. Bauteil zum Führen eines Zylinderkolbens, insbesondere eines Verbrennungsmotors, mit
- einem Grundkörper (2),
- mindestens einer in dem Grundkörper (2) ausgebildeten Zylinderbohrung (3),
- einer um eine Mittellängsachse (4) der mindestens einen Zylinderbohrung (3) verlaufenden Zylinderbohrungswandung (5), und
- mindestens einer um die Mittellängsachse (4) in der Zylinderbohrungswandung (5) verlaufenden Nut (6) und mindestens einem zugehörigen Nutsteg (7), der in einer zu der Mittellängsachse (4) gerichteten radialen Richtung (R) erste Hinterschnitte (11) für eine aufzubringende Beschichtung (S) ausbildet,
wobei in dem mindestens einen Nutsteg (7) mehrere Axial-Nuten (12) ausgebildet sind, die quer zu der mindestens einen Nut (6) verlaufen,
wobei der mindestens eine Nutsteg (7) in einer Umfangsrichtung (Φ) um die Mittellängsachse (4) aufgrund der Axial-Nuten (12) jeweilige zweite Hinterschnitte (15) für die aufzubringende Beschichtung (S) ausbildet,
wobei der mindestens eine Nutsteg (7) an mindestens einer der Axial-Nuten (12) mindestens einen Materialvorsprung (17) ausbildet, der sich in die mindestens eine Nut (6) erstreckt und in der Umfangsrichtung (Φ) einen jeweiligen weiteren Hinterschnitt (18) für die aufzubringende Beschichtung (S) ausbildet,
**dadurch gekennzeichnet,**
**dass** der mindestens eine Nutsteg (7) mehrere sich in der Umfangsrichtung (Φ) über 360° erstreckende Nutsteg-Windungen (W) aufweist und alle in den Nutsteg-Windungen (W) ausgebildeten Axial-Nuten (12) entlang von Geraden (G) ausgerichtet sind.

13. Werkzeug zum Aufrauen einer zu beschichtenden Zylinderbohrungswandung, mit
- einem Werkzeug-Grundkörper (20) zum Spannen in einer Werkzeugspindel,
- mindestens einer an dem Werkzeug-Grundkörper (20) drehbar gelagerten Verformungsrolle (23), wobei
- die mindestens eine Verformungsrolle (23) umfangsseitig an dem Werkzeug-Grundkörper (20) angeordnet ist,
- eine Drehachse (24) der mindestens eine Verformungsrolle (23) senkrecht zu einer Grundkörper-Mittellängsachse (21) verläuft,
- die mindestens eine Verformungsrolle (23) verlagerbar ist.
**dadurch gekennzeichnet,**
**dass** die mindestens eine Verformungsrolle (23) einen Rollen-Grundkörper (25) aufweist, an dem mindestens ein um die Drehachse (24) umlaufender Verformungsvorsprung (26) ausgebildet ist.

14. Werkzeug nach Anspruch 13, **dadurch gekennzeichnet,**
**dass** die mindestens eine Verformungsrolle (23) radial zu der Grundkörper-Mittellängsachse (21) verlagerbar ist.

## Claims

1. Method for roughening a cylinder bore wall to be coated, comprising the following steps:
- provision of a component (1) having a cylinder bore (3) and a cylinder bore wall (5) running around a central longitudinal axis (4),
- generation of at least one groove (6), running around the central longitudinal axis (4) in the cylinder bore wall (5), and at least one associated groove web (7), such that the at least one groove web (7), in a radial direction (R), directed toward the central longitudinal axis (4), forms first undercuts (11) for a coating (S) which is to be applied, and
- generation of axial grooves (12), running transversely to the at least one groove (6) in the cylinder bore wall (5), such that the at least one groove web (7), in a peripheral direction (Φ) about the central longitudinal axis (4), forms respective second undercuts (15) for the coating (S) which is to be applied, and the at least one groove web (7) on at least one of the axial grooves (12), forms at least one material projection (17), which extends into the at least one groove (6) and, in the peripheral direction (Φ), forms a respective further undercut (18) for the coating (S) which is to be applied,
**characterized**
**in that,** for the generation of the axial grooves (12), a tool (19) having at least one deformation roller (23) is moved along the central longitudinal axis (4), and the at least one deformation roller (23) rotates about a rotational axis (24), running transversely to the central longitudinal axis (4), in such a way on the cylinder bore wall (5) that the at least one deformation roller (23) plastically deforms the at least one groove web (7) for the formation of the axial grooves (12).

2. Method as claimed in claim 1, **characterized**
**in that** the at least one groove (6) has a groove depth T_{N} and the axial grooves (12) have a groove depth T_{A}, wherein: 0.05 ≤ T_{A}/T_{N} ≤ 2, in particular 0.1 ≤ T_{A}/T_{N} ≤ 1, and in particular 0.2 ≤ T_{A}/T_{N} ≤ 0.9.

3. Method as claimed in claim 1 or 2, **characterized**
**in that** the at least one groove web (7) has a groove web width (Bs) and the axial grooves (12) extend over the entire groove web width (Bs).

4. Method as claimed in one of claims 1 to 3, **characterized**
**in that** the at least one groove (6) has a groove width B_{N} and the axial grooves (12) have a groove width B_{A}, wherein: 0.05 ≤ B_{A}/B_{N} ≤ 2, in particular 0.2 ≤ B_{A}/B_{N} ≤ 1.5, and in particular 0.4 ≤ B_{A}/B_{N} ≤ 1.

5. Method as claimed in one of claims 1 to 4, **characterized**
**in that** the axial grooves (12) form with the central longitudinal axis (4) an angle α, wherein: -60° ≤ α ≤ 60°, in particular -20° ≤ α ≤ 20°, and in particular - 10° ≤ α ≤ 10°.

6. Method as claimed in one of claims 1 to 5, **characterized**
**in that** the generation of the at least one groove (6) comprises a machining and/or the at least one groove (6) has a spiral angle β, wherein: 0° < β ≤ 4°, in particular 0.1° ≤ β ≤ 3°, and in particular 0.2° ≤ β ≤ 2°.

7. Method as claimed in one of claims 1 to 6, **characterized**
**in that,** in the peripheral direction (Φ), adjacent axial grooves (12) have an angular spacing Δϕ, wherein: 0.5° ≤ Δcp ≤ 24°, in particular 0.5° ≤ Δϕ ≤ 15°, and in particular 0.5° ≤ Δϕ ≤ 2°.

8. Method as claimed in one of claims 1 to 7, **characterized**
**in that** the axial grooves (12) have a tapered cross section which, in particular, is of wedge-shaped configuration.

9. Method as claimed in one of claims 1 to 8, **characterized**
**in that** the at least one groove web (7) has a plurality of groove web windings (W) extending in the peripheral direction (Φ) over 360°, and the axial grooves (12) configured in the groove web windings (W) are oriented along straight lines (G).

10. Method as claimed in one of claims 1 to 9, **characterized**
**in that** the at least one deformation roller (23) is rotatably mounted on a tool main body (20) and is radially displaceable relative to the tool main body (20).

11. Method as claimed one of claims 1 to 10, **characterized**
**in that** the generation of the axial grooves (12) comprises the following steps:
- movement of the tool (19), having the at least one deformation roller (23), along the central longitudinal axis (4), such that the at least one deformation roller (23) plastically deforms the cylinder bore wall (5), in particular the at least one groove web (7), for the formation of a first part of the axial grooves (12),
- pivoting of the tool (19), if the at least one deformation roller (23) is disengaged from the cylinder bore wall (5), and
- movement of the tool (19) along the central longitudinal axis (4) such that the at least one deformation roller (23) plastically deforms the cylinder bore wall (5), in particular the at least one groove web (7), to form a second part of the axial grooves (12).

12. Component for guiding a cylinder piston, in particular of an internal combustion engine, having
- a main body (2),
- at least one cylinder bore (3) configured in the main body (2),
- a cylinder bore wall (5), running around a central longitudinal axis (4) of the at least one cylinder bore (3), and
- at least one groove (6), running around the central longitudinal axis (4) in the cylinder bore wall (5), and at least one associated groove web (7), which, in a radial direction (R) directed toward the central longitudinal axis (4), forms first undercuts (11) for a coating (S) which is to be applied,
wherein in the at least one groove web (7) are configured a plurality of axial grooves (12), which run transversely to the at least one groove (6),
wherein the at least one groove web (7), in a peripheral direction (Φ) about the central longitudinal axis (4), due to the axial grooves (12), forms respective second undercuts (15) for the coating (S) which is to be applied,
wherein the at least one groove web (7) on at least one of the axial grooves (12) forms at least one material projection (17), which extends into the at least one groove (6) and in the peripheral direction (Φ) forms a respective further undercut (18) for the coating (S) which is to be applied,
**characterized**
**in that** the at least one groove web (7) has a plurality of groove web windings (W) extending in the peripheral direction (Φ) over 360° and all the axial grooves (12) configured in the groove web windings (W) are oriented along straight lines (G).

13. Tool for roughening a cylinder bore wall to be coated, having
- a tool main body (20) for clamping in a tool spindle,
- at least one deformation roller (23) rotatably mounted on the tool main body (20), wherein
- the at least one deformation roller (23) is arranged peripherally on the tool main body (20),
- a rotational axis (24) of the at least one deformation roller (23) runs perpendicular to a main body central longitudinal axis (21),
- the at least one deformation roller (23) is displaceable,
**characterized**
**in that** the at least one deformation roller (23) has a roller main body (25) on which is configured at least one deformation projection (26), running around the rotational axis (24).

14. Tool as claimed in claim 13, **characterized**
**in that** the at least one deformation roller (23) is radially displaceable relative to the main body central longitudinal axis (21).

## Revendications

1. Procédé pour rendre rugueuse une paroi d'alésage cylindrique à revêtir, comprenant les étapes suivantes :
- mise à disposition d'un composant (1) avec un alésage cylindrique (3) et une paroi d'alésage cylindrique (5) s'étendant autour d'un axe longitudinal central (4),
- génération d'au moins une rainure (6) s'étendant autour de l'axe longitudinal central (4) dans la paroi d'alésage cylindrique (5) et au moins une nervure de rainure (7) associée de telle sorte que ladite au moins une nervure de rainure (7) forme dans une direction radiale (R) orientée vers l'axe longitudinal central (4) des premières contre-dépouilles (11) pour un revêtement (S) à appliquer, et
- génération de rainures axiales (12) s'étendant transversalement à ladite au moins une rainure (6) dans la paroi d'alésage cylindrique (5) de telle sorte que ladite au moins une nervure de rainure (7) forme dans une direction périphérique (Φ) autour de l'axe longitudinal central (4) des deuxièmes contre-dépouilles (15) respectives pour le revêtement (S) à appliquer et ladite au moins une nervure de rainure (7) forme sur au moins une des rainures axiales (12) au moins une saillie de matériau (17), qui s'étend dans ladite au moins une rainure (6) et forme dans la direction périphérique (Φ) une autre contre-dépouille (18) respective pour le revêtement (S) à appliquer,
**caractérisé en ce**
**que,** pour générer les rainures axiales (12), un outil (19) avec au moins un rouleau de déformation (23) est déplacé le long de l'axe longitudinal central (4) et ledit au moins un rouleau de déformation (23) tourne autour d'un axe de rotation (24) s'étendant transversalement à l'axe longitudinal central (4) sur la paroi d'alésage cylindrique (5) de telle sorte que ledit au moins un rouleau de déformation (23) déforme plastiquement ladite au moins une nervure de rainure (7) pour former les rainures axiales (12).

2. Procédé selon la revendication 1, **caractérisé en ce**
**que** ladite au moins une rainure (6) a une profondeur de rainure T_{N} et les rainures axiales (12) ont une profondeur de rainure T_{A}, où : 0,05 ≤ T_{A}/T_{N} ≤ 2, en particulier 0,1 ≤ T_{A}/T_{N} ≤ 1, et en particulier 0,2 ≤ T_{A}/T_{N} ≤ 0,9.

3. Procédé selon la revendication 1 ou 2, **caractérisé en ce**
**que** ladite au moins une nervure de rainure (7) a une largeur de nervure de rainure (B_{S}) et les rainures axiales (12) s'étendent sur toute la largeur de nervure de rainure (Bs).

4. Procédé selon l'une quelconque des revendications 1 à 3, **caractérisé en ce**
**que** ladite au moins une rainure (6) a une largeur de rainure B_{N} et les rainures axiales (12) ont une largeur de rainure B_{A}, où : 0,05 ≤ B_{A}/B_{N} ≤ 2, en particulier 0,2 ≤ B_{A}/B_{N} ≤ 1,5, et en particulier 0,4 ≤ B_{A}/B_{N} ≤ 1.

5. Procédé selon l'une quelconque des revendications 1 à 4, **caractérisé en ce**
**que** les rainures axiales (12) forment un angle α avec l'axe longitudinal central (4), où : -60° ≤ α ≤ 60°, en particulier -20° ≤ α ≤ 20°, et en particulier - 10° ≤ α ≤ 10°.

6. Procédé selon l'une quelconque des revendications 1 à 5, **caractérisé en ce**
**que** la génération de ladite au moins une rainure (6) comprend un usinage par enlèvement de copeaux et/ou ladite au moins une rainure (6) présente un angle d'hélice β, où : 0° < β ≤ 4°, en particulier 0,1° ≤ β ≤ 3°, et en particulier 0,2° ≤ β ≤ 2°.

7. Procédé selon l'une quelconque des revendications 1 à 6, **caractérisé en ce**
**que,** dans la direction périphérique (Φ), des rainures axiales (12) voisines ont une distance angulaire Δϕ, où : 0,5° ≤ Δcp ≤ 24°, en particulier 0,5° ≤ Δϕ ≤ 15°, et en particulier 0,5° ≤ Δϕ ≤ 2°.

8. Procédé selon l'une quelconque des revendications 1 à 7, **caractérisé en ce**
**que** les rainures axiales (12) ont une section transversale qui se rétrécit, qui est réalisée en particulier en forme de coin.

9. Procédé selon l'une quelconque des revendications 1 à 8, **caractérisé en ce**
**que** ladite au moins une nervure de rainure (7) présente plusieurs spires de nervure de rainure (W) s'étendant sur 360° dans la direction périphérique (Φ) et les rainures axiales (12) formées dans les spires de nervure de rainure (W) sont orientées le long de droites (G).

10. Procédé selon l'une quelconque des revendications 1 à 9, **caractérisé en ce**
**que** ledit au moins un rouleau de déformation (23) est monté à rotation sur un corps de base d'outil (20) et peut être déplacé radialement par rapport au corps de base d'outil (20).

11. Procédé selon l'une quelconque des revendications 1 à 10, **caractérisé en ce**
**que** la génération des rainures axiales (12) comprend les étapes suivantes :
- déplacement de l'outil (19) avec ledit au moins un rouleau de déformation (23) le long de l'axe longitudinal central (4) de telle sorte que ledit au moins un rouleau de déformation (23) déforme plastiquement la paroi d'alésage cylindrique (5), en particulier ladite au moins une nervure de rainure (7), pour former une première partie des rainures axiales (12),
- pivotement de l'outil (19) lorsque ledit au moins un rouleau de déformation (23) est hors de prise avec la paroi d'alésage cylindrique (5), et
- déplacement de l'outil (19) le long de l'axe longitudinal central (4) de telle sorte que ledit au moins un rouleau de déformation (23) déforme plastiquement la paroi d'alésage cylindrique (5), en particulier ladite au moins une nervure de rainure (7), pour former une deuxième partie des rainures axiales (12).

12. Composant pour guider un piston de cylindre, en particulier d'un moteur à combustion interne, avec
- un corps de base (2),
- au moins un alésage cylindrique (3) formé dans le corps de base (2),
- une paroi d'alésage cylindrique (5) s'étendant autour d'un axe longitudinal central (4) dudit au moins un alésage cylindrique (3), et
- au moins une rainure (6) s'étendant autour de l'axe longitudinal central (4) dans la paroi d'alésage cylindrique (5) et au moins une nervure de rainure (7) correspondante, qui forme dans une direction radiale (R) orientée vers l'axe longitudinal central (4) des premières contre-dépouilles (11) pour un revêtement (S) à appliquer,
plusieurs rainures axiales (12) étant formées dans ladite au moins une nervure de rainure (7), lesquelles s'étendent transversalement à ladite au moins une rainure (6),
ladite au moins une nervure de rainure (7) formant, dans une direction périphérique (Φ) autour de l'axe longitudinal central (4), en raison des rainures axiales (12), des deuxièmes contre-dépouilles (15) respectives pour le revêtement (S) à appliquer,
ladite au moins une nervure de rainure (7) formant, sur au moins l'une des rainures axiales (12), au moins une saillie de matériau (17) qui s'étend dans l'au moins une rainure (6) et forme, dans la direction périphérique (Φ), une autre contre-dépouille (18) respective pour le revêtement (S) à appliquer,
**caractérisé en ce**
**que** ladite au moins une nervure de rainure (7) présente plusieurs spires de nervure de rainure (W) s'étendant sur 360° dans la direction périphérique (Φ) et toutes les rainures axiales (12) formées dans les spires de nervure de rainure (W) sont orientées le long de droites (G).

13. Outil pour rendre rugueuse une paroi d'alésage cylindrique à revêtir, avec
- un corps de base d'outil (20) pour le serrage dans une broche d'outil,
- au moins un rouleau de déformation (23) monté à rotation sur le corps de base d'outil (20), dans lequel
- ledit au moins un rouleau de déformation (23) est disposé sur la périphérie du corps de base d'outil (20),
- un axe de rotation (24) dudit au moins un rouleau de déformation (23) s'étend perpendiculairement à un axe longitudinal central (21) du corps de base,
- ledit au moins un rouleau de déformation (23) est déplaçable,
**caractérisé en ce**
**que** ledit au moins un rouleau de déformation (23) présente un corps de base de rouleau (25) sur lequel est formée au moins une saillie de déformation (26) tournant autour de l'axe de rotation (24).

14. Outil selon la revendication 13, **caractérisé en ce**
**que** ledit au moins un rouleau de déformation (23) est déplaçable radialement par rapport à l'axe longitudinal central (21) du corps de base.
